# EUROPEAN PATENT SPECIFICATION

(11) **EP 3 313 948 B1**
(45) Date of publication and mention of the grant of the patent: **27.10.2021**
(21) Application number: 15744681.6
(22) Date of filing: 29.06.2015
(51) Int. Cl.: C09J 5/06

(54) **METHOD FOR BONDING TWO LAYERS WITH LIQUID ADHESIVE AND BONDED ASSEMBLY THEREOF**
VERFAHREN ZUR VERBINDUNG VON ZWEI SCHICHTEN MIT FLÜSSIGHAFTMITTEL UND VERBUNDENE ANORDNUNG DARAUS
PROCÉDÉ POUR LIER DEUX COUCHES À L'AIDE D'UN ADHÉSIF LIQUIDE ET ASSEMBLAGE AINSI LIÉ

(30) Priority: 25.06.2015 PT 2015108581
(43) Date of publication of application: 02.05.2018
(73) Proprietor: Bosch Car Multimedia Portugal, S.A., 4705-820 Braga (PT); Universidade do Minho, 4704-553 Braga (PT)
(72) Inventor: ALMEIDA MARTINS, Tiago José, P-3000-384 Coimbra (PT); DA CRUZ BARBOSA E SILVA, Estevão, P-4700-723 Braga (PT); AGUIAR RIBEIRO, Nuno Miguel, P-4705-820 Braga (PT); MEIRA LOUREIRO NOGUEIRA, António Miguel, P-470-305 Morgade (PT); MACHADO VIANA, Júlio César, P-4800-058 Guimarães (PT); MACEDO DE SOUSA, André Fernando, P-4800-058 Guimarães (PT); FERREIRA DA CRUZ, Sílvia Manuela, P-4800-058 Guimarães (PT); PREGO ROSMANINHO, Miguel Mota, P-4800-058 Guimarães (PT); KOK CHAN, Yau, 11900 Bayan Lepas Penang (MY)
(74) Representative: Slickers, Dirk
(86) International application number: PCT/IB2015/054860
(87) International publication number: WO 2016/207702

(56) References cited:
- EP-A2- 2 695 923
- WO-A1-2009/037886

## Description

### Technical field

The present disclosure relates to a method of bonding two substrates or layers with a liquid adhesive in a manner that brings the two into full-surface contact with the adhesive. More specifically, it also relates to the shape of the adhesive pattern that is made to facilitate the flow, to improve the contact of both substrates and to avoid the formation of bubbles and air entrapments.

### Background art

The wet optical bonding technology is based on the application of a material, usually a liquid optically clear adhesive (LOCA) between the cover layer and the display (or between two arbitrary layers) in order to improve its optical performance in bright light environment conditions. The adhesive eliminates the air layer between the cover layer and the display (or between two arbitrary layers), thereby reducing the total light reflection, improving the contrast. The LOCA is required to be optically transparent and have a suitable refractive index (i.e., a refractive index coincident with both materials in contact).

In typical processes, the LOCA is dispensed over the substrate layer with a given pattern and then both substrate and cover layers are pressed together in parallel. Furthermore, the adhesive should be applied under appropriate controlled conditions, such that there are no significant differences in the optical properties at the interface, and there are no entrapped air, voids and bubbles generated that could affect the optical properties of the display. For this, a specific pattern of the LOCA is applied during the bonding process, when the cover layer is mounted over the display. This guarantees the proper filling of the gap between both layers by the LOCA avoiding the defects abovementioned.

Typically the patterns for liquid dispensing materials to bond a display to a cover are comprised by 2 or 3 constituents, depending of the display layout:

the seal: act as sealant in the case of the displays with a metallic frame, avoiding flows to the inside of the display;

the dam: defines the area to bond, the distance between both layers and function as a barrier during the flow of the filling material, but it shall allow the air exhaust during the LOCA spreading during the assembly operation;

the filling material: the main constituent, the LOCA, which acts as the bonding material between the 2 layers surfaces.

The choice of the LOCA pattern is important to get good process results, ensuring an uniform dispersion, avoiding air entrapments/bubbles, overflow (adhesive over passing the dam limits) and leakage (adhesive passing the air vents). LOCA (like silicon or other materials) most famous dispensing shape is the dog bone shape with 8 vents in the dam path. For example, DELO company dispenses the filling bonding material in a dog bone pattern in a first surface, and they further improved the process with a drop in the other surface. However, these kinds of patterns have some drawbacks and limitations, because:
the dog-bone pattern and the drop technique are optimised for the parallel assembly of both layers (cover and display);
it requires a lot of breaks on the dam for air to escape;
the overflow/leakage is hard to control and the assembly method needs to ensure that both joined surfaces are perfectly parallel in order to ensure the symmetrical spreading of the filling material over the region to bond;
relative warpage on bonding surfaces will also difficult the symmetrical spreading of the bonding material. The number of exhaust points typically used on the dam only increases this problem because with warped surfaces the material may overflow/leakage in some preferential directions, which will difficult the control of the final bonded area.

There also exists others LOCA patterns that have been suggested to overcome some of these difficulties and limitations.

EP1973089 refers a method for manufacturing a device wherein the transparent adhesive application comprises the steps of: applying a fixed amount of a liquid transparent adhesive to one of the bonding surfaces in a dot shape in multiple spots (e.g., around corners and at the center); applying more adhesive to connect the dots of the applied adhesive with lines; reversing the bonding surface causing the adhesive to drip and become in contact with an opposite bonding surface to fill a gap between the bonding surfaces with the adhesive; curing the liquid transparent adhesive by irradiation with light incident from the transparent plate side. After, the dots of adhesive are brought into contact with the opposite bonding surface and the adhesive flows into a pattern that does not let in bigger air bubbles, the gap between the bonding surfaces is filled with the adhesive. This method is similar to the previous, having as major disadvantages: it is used only for the parallel assembly of both layers; no dam is used and the process takes a long time. The method does not eliminate air bubbles during filling, but reduced their dimensions to small sizes not detected by the human eye. It can only be applied to UV cure processes, because thermal heating may allow coalescence of these small bubbles into bigger ones.

JP2004224855 refers to a similar method where several liquid drops of different diameters are placed at several positions with specified distances. The same disadvantages apply as before described.

US8657992 refers to a method for the bonding of one or more material layers to a flat display, substantially free of optical defects such as entrapped dirt and air bubbles. The liquid bonding material is dispensed into an air gap between the flat surfaces to be bonded in a manner that continuously touches (wets) each surface simultaneously, using a special dispensing tip. By simultaneously wetting each surface, and by dispensing the liquid bonding material in a predetermined pattern between the surfaces, the introduction of entrapped dirt and the formation of air bubbles is prevented as the two mating surfaces are subsequently pressed together and the adhesive is cured. This method applies only for flat surface substrates due to the use of a moving dispensing tip between them. The simultaneous dispensing on opposed surfaces and the movement of the dispensing needle requires a slower process in order to avoid air entrapment and/or its generation at the surfaces interfaces. The same may also occur when dealing with non-parallel surfaces (e.g. warped surface).

These facts are disclosed in order to illustrate the technical problem addressed by the present disclosure.

WO 2009/037886 A1 shows a method for manufacturing an image display device having improved impact resistance by arranging a transparent resin layer between an image display panel and a protection panel.

EP 2 695 923 A2 describes a method for transparent bonding of transparent layers, in which a hardenable, transparent adhesive is provided.

### General description

The disclosure proposes a new way to assemble a cover layer (e.g., glass) onto a display (e.g., LCD) at an angle, using a predetermined shape in a 3D pattern of the bonding material, in particular a triangular-like shape with elevation, together with a predefined dam geometry , in particular a rectangular-like with chamfered corners, and with a low number of breaks or vents. In other words, with this new 3D pattern it is possible to flip one layer on the other in a controlled advantageous manner.

This strategy allows, in particular, for:
a continuous wetting of both surfaces as the tilt angle is reduced, thus avoiding air bubbles generation at the surface's interface;
a smooth flow of the bonding material avoiding air entrapments;

a reduction of the number of dam breaks for air exhaust and a better control of the material leakage, reducing in this way the amount of material and controlling the size of the final bonded area.

The aspects now disclosed are also less prone to problems when joining surfaces having some warpage. Also, because the dispensing of the bonding material is concentrated in a reduced 3D pattern, the dispensing time is reduced. Furthermore, because air bubbles or voids are eliminated, the use of pressure (autoclave) or vacuum is not required.

The confinement of the bonding material by the dam, which also acts as a spacer of the layers, allows the bonded product to be more robust and less prone to breakage.

The present disclosure describes a method for bonding two layers with a liquid adhesive, and the material's patterns to improve contact between both and a smooth flow, avoiding air entrapments, air bubbles or voids. The method disclosed comprises the dispensing of a dam material with a special pattern on one substrate layer, and on the same layer also dispensing with a special pattern the bonding material. After those steps, the other layer is positioned over the previous layer at a tilt angle, and brought down to contact the bonding material 3D pattern. As the layer is tilted over, decreasing the angle between the two layers, the bonding material is squeezed, spread over in a controlled way and covers the area to be bonded. This ends when the two layers are parallel and fully touching the dam material (gap height).

One aspect of the present disclosure is related to a method for bonding a cover to a display (or two arbitrary layers) using a bonding material, comprising the following steps:
placing on a display layer a peripheral spacer dam for confining the bonding material, wherein said dam has a substantially rectangular shape having two chamfered corners of a first larger side of the dam rectangle and having two corner air vents of a second larger side of the dam rectangle;
dispensing the bonding material in a predetermined position and with a predetermined pattern within said dam;
lowering a cover layer over the display layer, until the cover layer touches, at a tilted angle, along the air vent side of the dam rectangle;
gradually reducing the tilt angle of the cover layer until the cover layer is in contact with the chamfered side of the dam rectangle and the two layers are parallel and joined at a distance of the dam height,
wherein the bonding material predetermined position and shape are such to feed the bonding material along the dam sides and to converge the bonding material flow into the direction of the air vents, as the cover layer approaches the chamfered side of the dam rectangle.

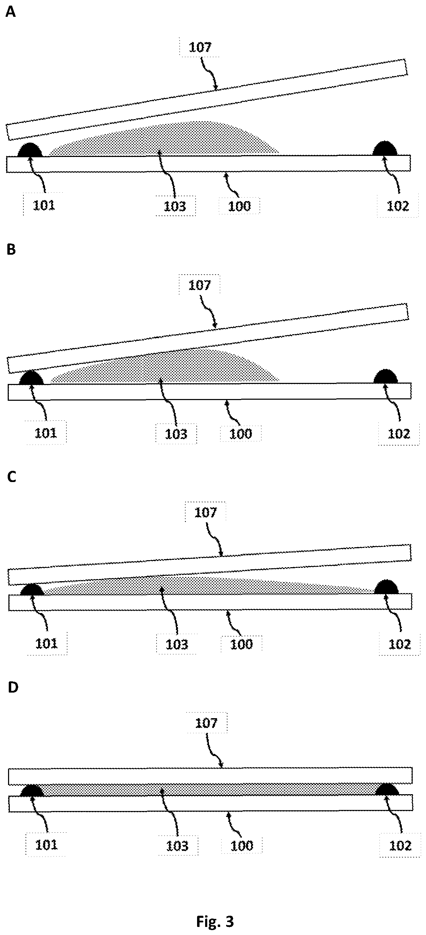

In this disclosure the term confined can be understood as to keep within the peripheral bounds of the dam or restricted to within the peripheric bounds of the dam In an embodiment of the method of the present subject-matter, the bonding material predetermined shape may be a mound of bonding material having an external outline of a triangular-like shape joined with a rectangular-like shape, wherein one of the larger sides of the rectangular-like shape is joined with the base of the triangular-like shape, wherein said mound is skewed in its thickness depending upon the required flow of the bonding material - either being thicker in the direction of the air vent side of the dam rectangle and being thinner in the direction of chamfered side of the dam rectangle, or the reverse being thinner in the direction of the air vent side of the dam rectangle and being thicker in the direction of chamfered side of the dam rectangle (see Fig. 3).

In another embodiment of the method of the present subject-matter, the rectangular-like shape of the bonding material is placed proximally and longitudinally parallel to the chamfered corner side of the dam.

In another embodiment of the method of the present subject-matter, the free larger side of the rectangular-like shape is convex.

In another embodiment of the method of the present subject-matter, wherein the rectangular-like shape extends beyond the base of the triangular-like shape.

In another embodiment of the method of the present subject-matter, the bonding material predetermined position is substantially centred within said dam.

In another embodiment of the method of the present subject-matter, the peripheral spacer dam is arranged between the two layers extending along substantially the whole periphery of the area to be bonded.

In another embodiment of the method of the present subject-matter, the bonding material is a liquid optically clear adhesive comprising a refractive index coincident with both layers.

In another embodiment of the method of the present subject-matter, the cover layer is a protective overlay glass or polymer.

Another aspect of the present subject-matter is related to a television, a computer, a plasma TV, an LCD TV, a mobile phone, a watch, a tablet or a display comprising the bonded cover to a display obtainable by the bonding method of the disclosed subject-matter.

Another aspect of the present subject-matter is related to a multi-layer bonded assembly for a display comprising:
a cover layer,
a display layer,
a peripheral spacer dam arranged between the two layers extending along substantially the whole periphery of the layers;
a bonding material sandwiched between the two layers and confined by said dam;
wherein said dam has a substantially rectangular shape having two chamfered corners of a first larger side of the dam rectangle and two corner air vents of a second larger side of the dam rectangle.

In another embodiment of the assembly of the present subject-matter, the air vent size is predetermined for controlling the bonding material leakage during assembly of the layers.

In another embodiment of the assembly of the present subject-matter, the bonding material is a liquid optically clear adhesive comprising a refractive index coincident with both layers.

In another embodiment of the assembly of the present subject-matter, the cover layer is a protective overlay glass or a polymer layer.

A television, a computer, a plasma TV, a LCD TV, a mobile phone, a watch, a tablet or a display comprising the assembly of the disclosed subject-matter.

In this disclosure, the special patterns in which the dam and bonding materials are dispensed allow controlling the flow of the bonding material. The dam material pattern has only two vents in order to allow the air to escape and to control the bonding material leakage. The chamfers at the opposite corners of the vents facilitate the smooth flow of the bonding material without air entrapments and air bubbles formation.

The bonding material has, in particular, a 3D pattern. The spatial triangular-like shape with a thick band at the larger side allows to feed the chamfered dam side during its flow and to converge the flow into the air vents position. This allows the air to be pushed away through the vent exhausts, producing air/bubbles-free bonding of the two layers.

The patterns of the dam and bonding materials and the way the layers are joined together (e.g., tilt angle and rate) are correlated. They are designed to ensure that when the bonding material starts to spread over the bonding area, the flows push all the air to the flow front, forcing it to escape through the vents on the dam. This ensures that no air is trapped in the bonding area and in consequence this area is bubble free.

### Brief description of the drawings

The following figures provide preferred embodiments for illustrating the invention and should not be seen as limiting the scope of the disclosure.

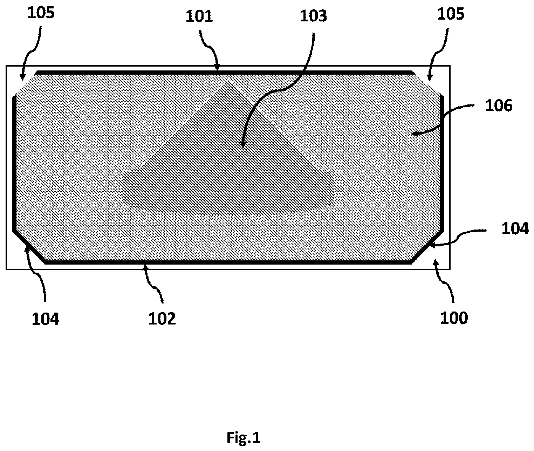

Figure 1 illustrates an embodiment of the optical bonding elements wherein:
   100 represents the display substrate layer;
   101 represents the dam material or periphery spacer material on the hinge side, i.e. the dam rectangle side between the air vents;
   102 represents the remaining dam material or periphery spacer material including the dam rectangle side between the chamfered corners;
   103 represents the dispensed bonding material;
   104 represents the dam chamfer;
   105 represents the dam vent;
   106 represents the bonding area (i.e. spread bonding material).

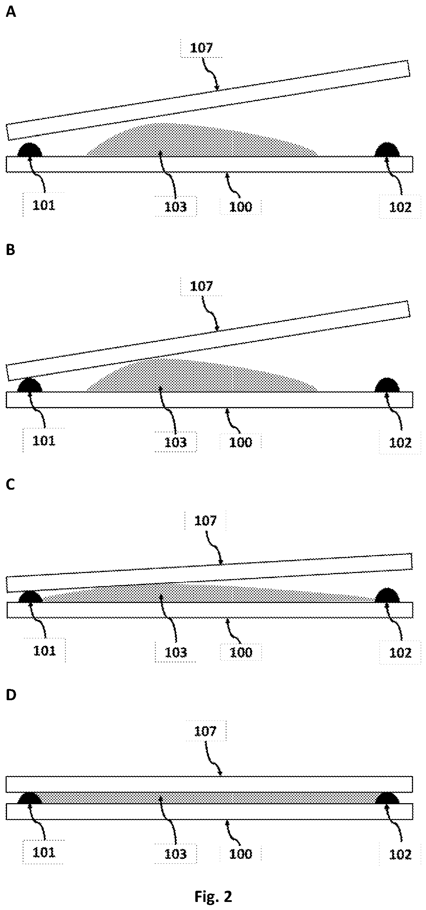

Figure 2 illustrates an embodiment of the assembly dispensing and dam with left side short tail and the position of both layers during their assembly process, wherein:
   107 represents the cover tilted layer;
   A represents the positioning of two layers placed face-to-face with a tilt angle;
   B represents the contact of tilted layer with the bonding material wherein the tilted layer is put in contact with the bonding material;
   C represents the spreading wherein the tilt angle is reduced at a given rate and bonding material is spread over the bonding area;
   D represents the substrates laid in parallel - the two layers are pressed together against the dam and bonding material flow stops.
Figure 3 illustrates an embodiment of the assembly dispensing and dam with right side short tail, wherein:
   A represents the positioning of two substrate layers placed face-to-face with a tilt angle;
   B represents the contact of tilted layer with the bonding material wherein the tilted layer is put in contact with the bonding material.
   C represents the spreading wherein the tilt angle is reduced at a given rate and bonding material is spread over the bonding area;
   D represents the layers laid in parallel - the two substrates are pressed together against the dam and bonding material flow stops.

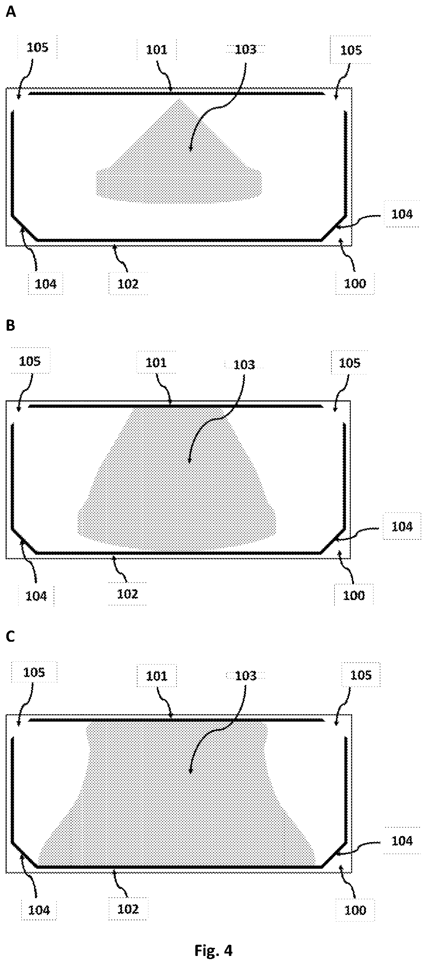

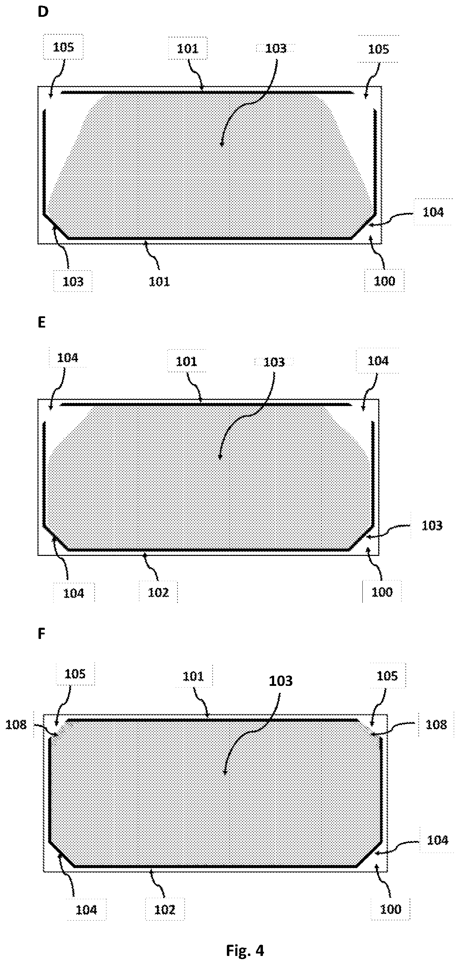

Figure 4 illustrates an embodiment of the bonding material flow during the substrate layer assembly, wherein
   108 represents the buffer zone;
   A represents the positioning of two layers placed face-to-face with a tilt angle;
   B represents the spreading wherein the tilt angle is reduced at a given rate and bonding material is spread over the bonding area and starts to spread along the distal side of the dam;
   C represents the spreading wherein the tilt angle is reduced at a given rate and bonding material is spread over the bonding area and also starts to spread along the proximal side of the dam;
   D represents the spreading wherein the tilt angle is reduced at a given rate and bonding material is spread over the bonding area, has finished spreading along the proximal side of the dam and also starts to spread along the proximal chamfered corners of the dam, while still spreading along the distal side of the dam;
   E represents the spreading wherein the tilt angle is reduced at a given rate and bonding material is spread over the bonding area and also starts to spread along the lateral sides of the dam while still spreading along the distal side of the dam;
   F represents the substrate layers laid in parallel - the two substrates are pressed together against the dam and bonding material flow stops, preferably without leakage through the dam vents.

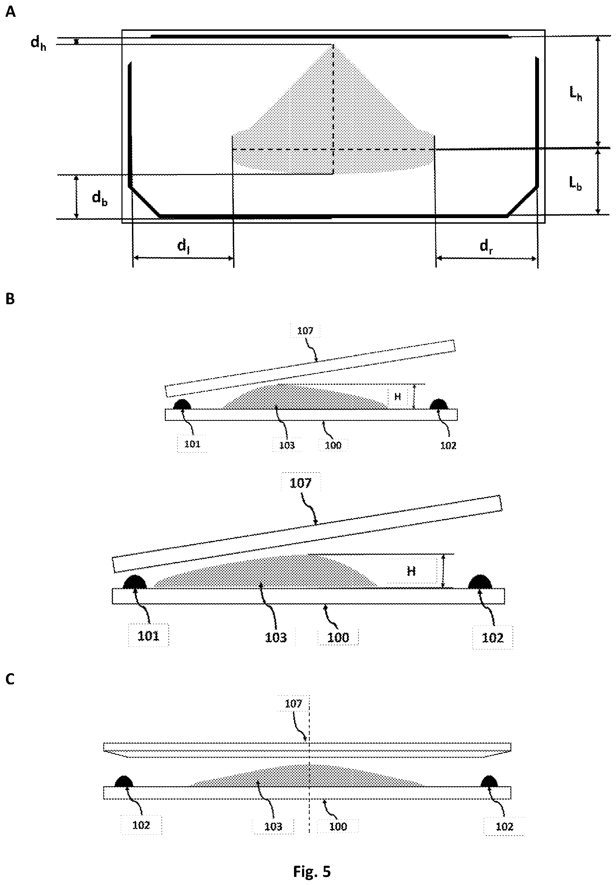

Figure 5 illustrates an embodiment of the initial 3D pattern of the bonding material: top (A), lateral (B) and front (C) views and
   dh is the distance between the corner or inflexion point of the filling material pattern and the dam hinge, and it shall be as close as possible to the dam to have a good initial wettability, avoiding the formation of bubbles in the bonding material;
   dl and dr are the closest as possible of the dam in order to obtain a good ratio of the filling area;
   db is the farthest from the peripheral spacer or dam to prevent that the filling material reaches the peripheral spacer or dam before the cover layer touch the dam;
   Lh and Lb ensure that the bonding material flow is homogeneous and non-turbulent;
   H is the thickness of the boding material pattern.

### Detailed description

The present disclosure relates to a method of bonding two layers with a liquid optically clear adhesive (LOCA) in a manner that combining a specific dam pattern and a specific pattern of dispensed LOCA, a smooth filling of the layers gap is achieved and the two surfaces are bonded without defects. In an embodiment the bonding method that use these patterns, includes in particular the following steps as displayed in: applying in a specific pattern a fixed amount of a dam material on one of the layers; then, in the same layer a specific pattern of the filling material is dispensed in a fixed amount. After these steps, the other layer is positioned over this substrate layer with the dam and the filling material patterns, and at a tilt angle, typically 2-10º, it is brought vertically down to contact the bonding material. As the tilted layer is tipped over, decreasing the angle between the two layers, the bonding material is squeezed, which in a control way, make it spreading over the area to bond (Figure 3). This ends when the layers are parallel and at a distance dictated by the dam height.

The dam material or peripheral spacer material has four functions, namely:
to ensure the bonding gap (height);
to control the overflow/leakage of the bonding material;
to limit the bonding area and;
to guide the flow of the bonding material.

In an embodiment, the dam material or peripheral spacer can be placed on the layers as a solid or dispensed as a liquid and then solidified. In this latter case, the dam material that typically can be a silicone with a high viscosity in order to not flow after dispensing and form a barrier line, can be dispensed by a nozzle, where the flow rate and the nozzle speed define the amount of dam material dispensed. In an embodiment, it is very important that the flow rate and the nozzle speed is constant to ensure a uniform line of the dam material, which is crucial to define the bonding gap. The pattern in which the dam material is dispensed must ensure a smooth spread of the filling material, with a minimum number of breaks/opens, preferably two at the last zones to be filled. For this, the dam corners can be chamfered. The reason of the two opens is to allow air to escape when the bonding material spreads over the bonding area and also to avoid areas where overflow/leakage is critical. The dam corners are chamfered to better guide the flow of the bonding material ensuring a smooth transition of the LOCA in this zone, and reducing the chance of trapping air in this zone.

In an embodiment, the LOCA should have also a good adhesion to both layers to ensure a firm bonding, and a low viscosity and high wettability on the layers to spread easily over them. The bonding material is dispensed via a nozzle. A purge should always be made, and the containers should be degassing each time they are filled in order to prevent that the dispensed material come with air bubbles. When dispensing occurs the tip of the nozzle needs to be dived in the bonding material to not trapping air during this phase. The pattern of the dispensed LOCA has a triangular-like shape with a thick rectangular band at the larger side (Figure 1, 4A or 5A), with a skewed mound-shape. The quantity of filling material depends upon the total area to be covered (bonded area) and the gap to be filled. The pattern has this geometry to allow the filling material spreading without trapping air. When the joining process starts (Figure 1, 4A or 5A), the cover layer is positioned over the display and slowly tipped and pressed so it starts to spread over. The way the cover layer press the material makes it to be pushed way from the hinge side, so the material flow is faster in this direction, at the same time the material is being pushed to the sides of the hinge at a slow pace. When the material touches the opposite side of the hinge it starts to flow faster toward the sides, and also at a slow pace it flows toward the sides near the hinge. Then, because in the opposite side of the hinge the dam does not have breaks and the corners are chamfered so when the material reach this zone starts to flows toward the hinge. On the hinge side the material continuous at a slow pace and moves towards the sides, which makes the material closing in toward the opens in the dam with the flow front push all the air toward the breaks in the dam, avoiding this way trapping the air. A buffer zone remain unfilled with bonding material to avoid material leakage.

The dam material pattern, the bonding material pattern and the way that the layers are joined together are highly correlated and attention needs to be devoted to these interactions. When the bonding material starts to spread, the way it flows allow all the air to be pushed away to the flow front and to escape through the air vents on the dam. This ensures that no air is trapped in the bonding area and in consequence this area is bubble free. Both the dam geometry (chamfers and vents) and the 3D pattern of the bonding material can be designed manually or by computation tools (e.g., material flow simulation) in order fulfil the abovementioned flow features.

For this pattern strategy works correctly is important that:

the dam material has a high enough viscosity that once dispensed it can keep its geometry (cross-section and height) till the thermal cure process; a typical viscosity range is 50-120 Pa.s.

The time between the end of the dispensing of the bonding material and the start of the joining process should be as short as possible (e.g. less than 2-3 minutes), to ensure the filling material still have the desire pattern when the joining process starts.

The tilt angle and the approach velocities, in particular the contact velocity and the tilt angle changing rate of the layer should be controlled and should allow the bonding material to be spread smoothly over the bonding area, otherwise, for example, if this velocity is too high, a turbulent flow can be generated that can entrap air and led to the generation of bubbles; typical values for tilt angles are in the range of 2-10º and for 0.015-0.030 º/s;

To avoid the overflow over the dam, the cover layer must touch the dam before the material flow front reaches the dam. To ensure this, the ratio between the dispensing area and the bonding area shall be higher than the ratio between the bonding gap and the dam height, the bonding gap being the final thickness desired for the filling/adhesive material.

The 3D pattern of the bonding material is obtained, in particular, by dispensing it in a control way in the substrate layer. The dimensions for the initial bonding material 3D pattern (Figure 5) are dependent upon the geometry of the bonding area. It is advisable that (Figure 5):
dn, is as close as possible to the dam to have a good initial wettability, avoiding the formation of bubbles in the bonding material;
dl and dr are the closest as possible in order to obtain a good ratio of the filling area;
db are the farthest from the peripheral spacer dam to prevent that the filling material reaches the peripheral spacer dam before the cover layer touch the dam;
Lh and Lb ensure that the bonding material flow is homogeneous and non-turbulent;
H is the thickness of the peripheral spacer dam.

To avoid the overflow of the bonding material, the tilted layer must touch the dam before the material flow front reaches the dam.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The embodiments described above can be combined with each other. The following claims further define the preferred embodiments of the disclosure.

## Claims

1. A method for bonding a cover layer to a display layer using a bonding material, comprising the following steps:
placing on the display layer a peripheral spacer dam for confining the bonding material, wherein said dam has a substantially rectangular shape having two chamfered corners of a first larger side of the dam rectangle and two corner air vents of a second larger side of the dam rectangle;
dispensing the bonding material in a predetermined position and with a predetermined shape within said dam;
lowering the cover layer over the display layer, until the cover layer touches, at a tilted angle, along the air vent side of the dam rectangle;
gradually reducing the tilt angle of the cover layer until the cover layer is in contact with the chamfered side of the dam rectangle and the two layers are parallel and joined at a distance of the dam height,
wherein the bonding material predetermined position and shape are such to feed the bonding material along the dam sides and to converge the bonding material flow into the direction of the air vents.

2. Method according to the previous claim wherein the bonding material predetermined shape is a mound-shaped of bonding material having an external outline of a substantially triangular-like shape joined with a substantially rectangular-like shape, wherein one of the larger sides of the rectangular-like shape is joined with the base of the triangular-like shape, wherein said mound is skewed, in particular in its thickness being thicker in the direction of the air vent side of the dam rectangle and being thinner in the direction of chamfered side of the dam rectangle.

3. Method according to the previous claims wherein the rectangular-like shape of the bonding material is placed proximally and longitudinally parallel to the chamfered corner side of the dam.

4. Method according to any of the previous claims wherein the free larger side of the rectangular-like shape is convex.

5. Method according to any of the previous claims wherein the rectangular-like shape extends beyond the base of the triangular-like shape.

6. Method according to any of the previous claims wherein the bonding material predetermined position is substantially centred within said dam.

7. Method according to any of the previous claims wherein the peripheral spacer dam is arranged between the two layers extending along substantially the whole periphery of the layers.

8. Method according to any of the previous claims wherein the bonding material is a liquid optically clear adhesive comprising a refractive index coincident with both layers.

9. Method according to any of the previous claims wherein the cover layer is a protective overlay glass or a polymer layer.

10. Method according to any of the previous claims wherein the ratio between the dispensing area and the bonding area shall be higher than the ratio between the bonding gap and the dam height, the bonding gap being the final thickness desired for the filling/adhesive material.

11. A television, a computer, a plasma TV, an LCD TV, a mobile phone, a watch, a tablet or a display comprising a bonded cover, obtainable by the method of any of the claims 1-10.

12. A multi-layer bonded assembly for a display comprising:
a cover layer,
a display layer,
a peripheral spacer dam arranged between the two layers extending along substantially the whole periphery of the layers;
a bonding material sandwiched between the two layers and confined by said dam;
wherein said dam has a substantially rectangular shape having two chamfered corners of a first larger side of the rectangle and two corner air vents of a second larger side of the rectangle.

13. The assembly according to claim 12 wherein the air vent size is predetermined for controlling the bonding material leakage during the bonding of the assembly of the layers according to the method according to any of the claims 1-10.

14. The assembly according to any of the claims 12-13 wherein the bonding material is a liquid optically clear adhesive comprising a refractive index coincident with both layers.

15. The assembly according to any of the claims 12-14 wherein the cover layer is a protective overlay glass or polymer layer.

16. A television, a computer, a plasma TV, an LCD TV, a mobile phone, a watch, a tablet or a display comprising the assembly according to any of the claims 12-15.

## Patentansprüche

1. Verfahren zum Verbinden einer Abdeckschicht mit einer Anzeigeschicht unter Verwendung eines Verbindungsmaterials, das die folgenden Schritte umfasst:
Anordnen einer peripheren Abstandshalterbegrenzung zum Begrenzen des Verbindungsmaterials auf der Anzeigeschicht, wobei die Begrenzung eine im Wesentlichen rechtwinklige Form mit zwei abgefasten Ecken einer ersten größeren Seite des Begrenzungsrechtecks und zwei Eckenentlüftungsöffnungen einer zweiten größeren Seite des Begrenzungsrechtecks aufweist;
Verteilen des Verbindungsmaterials an einer vorgegebenen Position und mit einer vorgegebenen Form innerhalb der Begrenzung;
Absenken der Abdeckschicht über der Anzeigeschicht, bis die Abdeckschicht unter einem Neigungswinkel entlang der Entlüftungsöffnungsseite des Begrenzungsrechtecks berührt;
allmähliches Verringern des Neigungswinkels der Abdeckschicht, bis sich die Abdeckschicht mit der abgefasten Seite des Begrenzungsrechtecks in Kontakt befindet und die zwei Schichten parallel und in einem Abstand der Begrenzungshöhe zusammengefügt sind,
wobei die vorgegebene Position und Form des Verbindungsmaterials derart sind, dass das Verbindungsmaterial entlang der Begrenzungsseiten eingespeist wird und der Fluss des Verbindungsmaterials in der Richtung der Entlüftungsöffnungen konvergiert.

2. Verfahren nach dem vorhergehenden Anspruch, wobei die vorgegebene Form des Verbindungsmaterials ein wallförmiges Verbindungsmaterial ist, das einen Außenumriss mit einer im Wesentlichen dreieckähnlichen Form, die mit einer im Wesentlichen rechteckähnlichen Form kombiniert ist, aufweist, wobei eine der größeren Seiten der rechteckähnlichen Form mit der Basis der dreieckähnlichen Form zusammengefügt ist, wobei der Wall schiefwinklig ist, wobei er insbesondere bezüglich seiner Dicke in der Richtung der Entlüftungsöffnungsseite des Begrenzungsrechtecks dicker ist und in der Richtung der abgefasten Seite des Begrenzungsrechtecks dünner ist.

3. Verfahren nach den vorhergehenden Ansprüchen, wobei die rechteckähnliche Form des Verbindungsmaterials in räumlicher Nähe und in Längsrichtung parallel zur Seite mit den abgefasten Ecken der Begrenzung angeordnet ist.

4. Verfahren nach einem der vorhergehenden Ansprüche, wobei die freie größere Seite der rechteckähnlichen Form konvex ist.

5. Verfahren nach einem der vorhergehenden Ansprüche, wobei sich die rechteckähnliche Form über die Basis der dreieckähnlichen Form hinaus erstreckt.

6. Verfahren nach einem der vorhergehenden Ansprüche, wobei die vorgegebene Position des Verbindungsmaterials im Wesentlichen innerhalb der Begrenzung zentriert ist.

7. Verfahren nach einem der vorhergehenden Ansprüche, wobei die periphere Abstandshalterbegrenzung zwischen den zwei Schichten angeordnet ist, wobei sie sich im Wesentlichen entlang der gesamten Umfangslinie der Schichten erstreckt.

8. Verfahren nach einem der vorhergehenden Ansprüche, wobei das Verbindungsmaterial ein flüssiges, optisch klares Haftmittel ist, das einen Brechungsindex, der mit beiden Schichten übereinstimmt, umfasst.

9. Verfahren nach einem der vorhergehenden Ansprüche, wobei die Abdeckschicht ein schützendes Deckglas oder eine Polymerschicht ist.

10. Verfahren nach einem der vorhergehenden Ansprüche, wobei das Verhältnis zwischen der Verteilungsfläche und der Verbindungsfläche höher als das Verhältnis zwischen dem Verbindungszwischenraum und der Begrenzungshöhe sein soll, wobei der Verbindungszwischenraum die endgültige Dicke ist, die für das Füll/Haftmittel-Material gewünscht ist.

11. Fernseher, Computer, Plasma-TV, LCD-TV, Mobiltelefon, Armbanduhr, Tablet oder Anzeige mit einer verbundenen Abdeckung, die durch das Verfahren nach einem der Ansprüche 1-10 erhalten werden kann.

12. Verbundene Mehrschichtbaugruppe für eine Anzeige, die Folgendes umfasst:
eine Abdeckschicht;
eine Anzeigeschicht;
eine periphere Abstandshalterbegrenzung, die zwischen den zwei Schichten angeordnet ist, wobei sie sich im Wesentlichen entlang der gesamten Umfangslinie der Schichten erstreckt;
ein Verbindungsmaterial, das zwischen den zwei Schichten eingebettet und durch die Begrenzung begrenzt ist;
wobei die Begrenzung eine im Wesentlichen rechtwinklige Form mit zwei abgefasten Ecken einer ersten größeren Seite des Rechtecks und zwei Eckenentlüftungsöffnungen einer zweiten größeren Seite des Rechtecks aufweist.

13. Baugruppe nach Anspruch 12, wobei die Größe der Entlüftungsöffnungen zum Steuern des Austritts des Verbindungsmaterials während des Verbindens der Schichten der Baugruppe gemäß dem Verfahren nach einem der Ansprüche 1-10 vorgegeben ist.

14. Baugruppe nach einem der Ansprüche 12-13, wobei das Verbindungsmaterial ein flüssiges, optisch klares Haftmittel ist, das einen Brechungsindex, der mit beiden Schichten übereinstimmt, umfasst.

15. Baugruppe nach einem der Ansprüche 12-14, wobei die Abdeckschicht ein schützendes Deckglas oder eine Polymerschicht ist.

16. Fernseher, Computer, Plasma-TV, LCD-TV, Mobiltelefon, Armbanduhr, Tablet oder Anzeige mit der Baugruppe nach einem der Ansprüche 12-15.

## Revendications

1. Procédé de collage d'une couche de couverture à une couche d'affichage au moyen d'un matériau de collage, comprenant les étapes suivantes :
positionnement, sur la couche d'affichage, d'une barrière d'espacement périphérique destinée à confiner le matériau de collage, ladite barrière ayant une forme sensiblement rectangulaire ayant deux coins chanfreinés sur un premier plus grand côté du rectangle barrière et deux évents de coin sur un deuxième plus grand côté du rectangle barrière ;
application du matériau de collage à une position prédéterminée et avec une forme prédéterminée à l'intérieur de ladite barrière ;
abaissement de la couche de couverture sur la couche d'affichage jusqu'à ce que la couche de couverture touche, à un angle incliné, le long du côté des évents du rectangle barrière ;
diminution progressive de l'angle d'inclinaison de la couche de couverture jusqu'à ce que la couche de couverture soit en contact avec le côté chanfreiné du rectangle barrière et les deux couches soient parallèles et jointes à une distance égale à la hauteur de barrière,
dans lequel la position et la forme prédéterminées du matériau de collage permettent d'introduire le matériau de collage le long des côtés de la barrière et de faire converger l'écoulement de matériau de collage dans la direction des évents.

2. Procédé selon la revendication précédente dans lequel la forme prédéterminée du matériau de collage est une forme de monticule de matériau de collage ayant un contour externe d'une forme de type sensiblement triangulaire reliée à une forme de type sensiblement rectangulaire, dans lequel un des plus grands côtés de la forme de type rectangulaire est relié à la base de la forme de type triangulaire, dans lequel ledit monticule est asymétrique, en particulier en ce que son épaisseur est plus grande dans la direction du côté des évents du rectangle barrière et plus petite dans la direction du côté chanfreiné du rectangle barrière.

3. Procédé selon les revendications précédentes dans lequel la forme de type rectangulaire du matériau de collage est placée de façon proximale et longitudinalement parallèle au côté des coins chanfreinés de la barrière.

4. Procédé selon l'une quelconque des revendications précédentes dans lequel le plus grand côté libre de la forme de type rectangulaire est convexe.

5. Procédé selon l'une quelconque des revendications précédentes dans lequel la forme de type rectangulaire s'étend au-delà de la base de la forme de type triangulaire.

6. Procédé selon l'une quelconque des revendications précédentes dans lequel la position prédéterminée du matériau de collage est sensiblement centrée à l'intérieur de ladite barrière.

7. Procédé selon l'une quelconque des revendications précédentes dans lequel la barrière d'espacement périphérique est disposée entre les deux couches en s'étendant sensiblement le long de la périphérie entière des couches.

8. Procédé selon l'une quelconque des revendications précédentes dans lequel le matériau de collage est un adhésif liquide optiquement transparent présentant un indice de réfraction coïncidant avec celui des deux couches.

9. Procédé selon l'une quelconque des revendications précédentes dans lequel la couche de couverture est un verre de recouvrement protecteur ou une couche polymère.

10. Procédé selon l'une quelconque des revendications précédentes dans lequel le rapport entre la superficie d'application et la superficie de collage doit être supérieur au rapport entre l'interstice de collage et la hauteur de barrière, l'interstice de collage étant l'épaisseur finale souhaitée pour le matériau de remplissage/adhésif.

11. Téléviseur, ordinateur, TV plasma, TV LCD, téléphone mobile, montre, tablette ou afficheur comprenant une couverture collée, pouvant être obtenue par le procédé de l'une quelconque des revendications 1 à 10.

12. Assemblage multicouche collé pour un écran comprenant :
une couche de couverture,
une couche d'affichage,
une barrière d'espacement périphérique disposée entre les deux couches s'étendant sensiblement le long de la périphérie entière des couches ;
un matériau de collage intercalé entre les deux couches et confiné par ladite barrière ;
dans lequel ladite barrière a une forme sensiblement rectangulaire ayant deux coins chanfreinés sur un premier plus grand côté du rectangle et deux évents de coin sur un deuxième plus grand côté du rectangle.

13. Assemblage selon la revendication 12 dans lequel la taille d'évent est prédéterminée pour contrôler la fuite de matériau de collage pendant le collage de l'assemblage des couches selon le procédé selon l'une quelconque des revendications 1 à 10.

14. Assemblage selon l'une quelconque des revendications 12 et 13 dans lequel le matériau de collage est un adhésif liquide optiquement transparent présentant un indice de réfraction coïncidant avec celui des deux couches.

15. Assemblage selon l'une quelconque des revendications 12 à 14 dans lequel la couche de couverture est un verre de recouvrement protecteur ou une couche polymère.

16. Téléviseur, ordinateur, TV plasma, TV LCD, téléphone mobile, montre, tablette ou afficheur comprenant l'assemblage selon l'une quelconque des revendications 12 à 15.
